# EUROPEAN PATENT APPLICATION

(11) **EP 1 992 590 A1**
(43) Date of publication of application: **19.11.2008**
(21) Application number: 08156101.1
(22) Date of filing: 13.05.2008
(51) Int. Cl.: B81C 1/00

(54) **Packaging assembly for an optical chip in a gyroscopic unit**

(30) Priority: 15.05.2007 US 749093
(71) Applicant: Honeywell International Inc., Morristown NJ 07960 (US)
(72) Inventor: Kaliszek, Andrew W., Phoenix, AZ 85022 (US); Mead, Derek T., Scottseale, AZ 85254 (US); Grooms, Jason C., St. Petersburg, FL 33704 (US); Robbins, Michael D., Peoria, AZ 85382 (US); Herman, Christopher S., Glendale, AZ 85302 (US)
(74) Representative: Buckley, Guy Julian

(57) **Abstract**

A structural packaging assembly (100) to support a multi-function optic chip or the like is mountable in a gyroscopic unit. An example assembly includes a housing (104) mounted to a mounting plate. The chip is located in the housing, which in turn is coupled to a mounting plate (102). The housing may have a prescribed section modulus capable of sufficiently withstanding applied vibrations within a predefined vibrational range, such as a vibrational range at or below about 3500 Hz. The structural packaging assembly utilizes a mounting system with mounting feet that clamp to dowels, which in turn have been press fit into the mounting plate. In one embodiment, the mounting feet take the form of "C" clamp mechanisms, which after being clamped to the dowels, allow for resonance dampening between the housing and the mounting plate.

## Description

### BACKGROUND OF THE INVENTION

Multi-function optic chips (MFC) are commonly used in strategic navigational grade fiber gyroscopes. One such MFC is an optical chip known as an integrated optical chip (IOC) whose consistent and reliable function is critical for a gyroscopic unit, for example a fiber optic gyroscope. The MFC operates to reduce intensity and phase modulation errors that would result in larger integrated angle error and lower gyroscope accuracy. During its operational life, the MFC is exposed to inertial loading such as attenuated vibration, thermal loading such as uniform (isothermal) temperature transients, and even external loading. In addition and as discussed below, the MFC must be electrically isolated, therefore it is mounted in a specialized housing or structural packaging assembly.

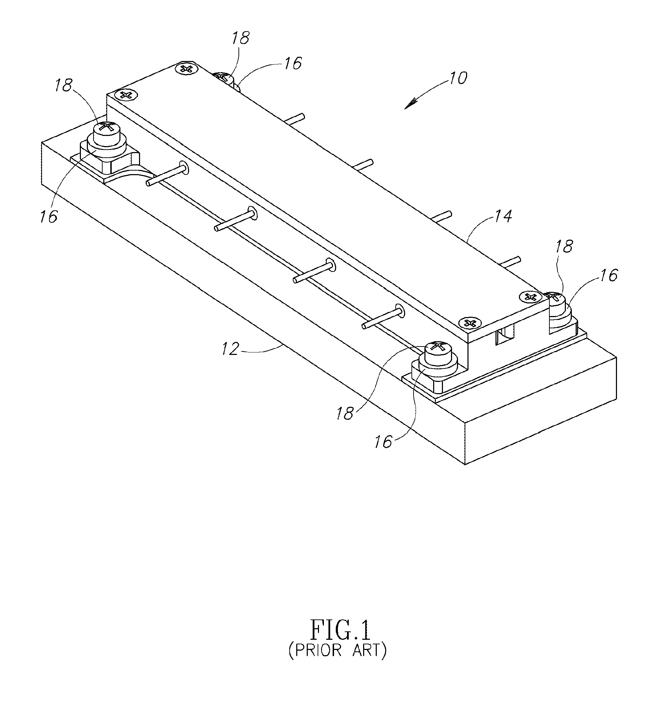

FIGURE 1 shows a current type of structural packaging assembly 10 used for mounting the MFC (not shown) onto a mounting plate 12 of the gyroscopic unit. The structural packaging assembly 10 generally includes a rectangular-shaped housing 14 having four mounting feet or bosses 16 each configured to receive a threaded fastener 18. One drawback of the existing structural packing assembly 10 is that the housing 14 resonates in a vibration range that coincides with an operational vibration range of the gyroscopic unit.

In addition the current MFC mounting scheme may induce undesired non-linear modes of vibrations at out of plane direction due to different, acceleration direction dependent, stiffness of MFC mounting. For example as a result of out of plane dynamic loads, applied to the MFC housing, two conditions may be generated at the MFC housing/mounting plate interface: (1) a temporary lack of a mechanical contact between the housing and the mounting plate during a first part of a vibration cycle; or (2) a firm contact between the MFC housing and the mounting plane during a remaining portion of the vibration cycle. Non-linear vibration modes cause an undesired rectification effect gyro bias (i.e., a dynamically induced offset of average gyro bias that could be interpreted as apparent rotation of the system).

Another drawback of the existing structural packaging assembly 10 is that the housing has a coefficient of thermal expansion (CTE) mismatch between the rectangular-shaped stainless steel housing 14 and the Aluminum mounting plate 12 of the gyroscopic unit. This CTE mismatch generates stress/strain conditions in the housing 14 during thermal transients. These strain/stress conditions are stored in a form of potential energy that incrementally build up over time. The potential energy can be dissipated through the fasteners 18 at any time and may cause a physical displacement of the MFC located within the housing 14, which in turn may adversely affect the calibration of the gyroscopic unit. The dissipation of the potential energy may be sporadic and unpredictable or may occur during shock loading or a temperature change.

Therefore, there exists a need for improving the vibrational characteristics and fixity of the structural packaging assembly when mounting the MFC to the gyroscopic unit.

### SUMMARY OF THE INVENTION

The present invention provides assemblies and methods for mounting a multi-function optic chip or the like in a gyroscopic unit. In one embodiment, a structural packaging assembly for the chip includes a housing mounted to a mounting plate. The chip is located in the housing, which in turn is coupled to a mounting plate. The housing may have a prescribed section modulus capable of sufficiently withstanding applied vibrations within a predefined vibrational range, such as a vibrational range at or below about 3500 Hz. The structural packaging assembly utilizes a mounting system with mounting feet that clamp to dowels, which in turn have been press fit into the mounting plate. In one embodiment, the mounting feet take the form of "C" clamp mechanisms, which after being clamped to the dowels, allow for resonance dampening between the housing and the mounting plate.

In one aspect of the invention, a housing for mounting an optical chip in a gyroscopic unit includes an structural cover and a plurality of sidewalls. The sidewalls extend from and are fixedly attached to the structural cover. The sidewalls and the structural cover are structurally arranged to produce a housing sectional modulus capable of resisting a substantial amount of deformation when the housing is subjected to a first vibration range that is within an operational vibration range of the gyroscopic unit. Further, a number of mounting feet are coupled to and extend from the sidewalls.

In another aspect of the invention, a packaging assembly for mounting an optical chip in a gyroscopic unit, the packaging assembly includes a mounting plate; a plurality of dowels fixed to and extending from the mounting plate; and a housing having sidewalls and mounting feet extending from the sidewalls, each mounting foot having a first portion with a first aperture to receive a portion of one of the respective dowels and a clamping portion extending from the first portion, the clamping portion having a second aperture to receive a fastening device, wherein tightening the fastening device fixedly couples the housing to the mounting plate while substantially, vibrationally isolating the housing from the mounting plate when the gyroscopic unit operates within a first vibration range.

### BRIEF DESCRIPTION OF THE DRAWINGS

Preferred and alternative embodiments of the present invention are described in detail below with reference to the following drawings:

FIGURE 1 is an isometric view of an existing structural packaging assembly for a gyroscopic unit; and

FIGURE 2 is an isometric view of a structural packaging assembly for a gyroscopic unit according to an embodiment of the invention; and

FIGURE 3 is a partial, close-up isometric view of the structural packaging assembly of FIGURE 2 showing a cutaway view of a mounting foot to better see a dowel used to mount a housing to a mounting plate of the gyroscopic unit.

### DETAILED DESCRIPTION OF THE PREFERRED EMBODIMENT

Multi-function optic chips (MFC) are commonly used in gyroscopic units, such as a strategic navigational grade fiber gyroscope. Preferably, the MFC should be packaged to reduce intensity and phase modulation errors that otherwise could result in a larger integrated angle error and an overall lower gyroscope accuracy. According to one preferred embodiment of the invention, the MFC is packaged or mounted in the gyroscopic unit with a structural packaging assembly that is configured to protect the MFC from high shock and excessive vibration during its operational life.

In many applications or environments, for example aerospace applications that may involve extreme temperature environments, the MFC is typically exposed to and should be able to withstand uniform (isothermal) temperature transients and attenuated vibration environments that do not exceed predetermined package qualification standards or levels. Some of the standards for MFC packaging are that a housing of the structural packaging assembly must be electro-conductive, the structural packaging assembly should have a coefficient of thermal expansion (CTE) that matches, as closely as possible, a CTE of a Lithium Niobate chip, have a sufficient amount of rigidity to tolerate and withstand a structural resonance above 2500 Hertz (Hz), the electro-conductive housing must be electrically isolated from a mounting plate of the gyroscopic unit, the positional stability of the MFC, as mounted, should be linearly predictable at any load condition (*e.g.,* preferably no slippage or inner-generated displacements during operation, shipping, storage and installation), the vibrational characteristics of the structural packaging assembly should not change or otherwise vary due to creep, yielding or stress relaxation at storage condition (5C to 60C) for at least 25 years.

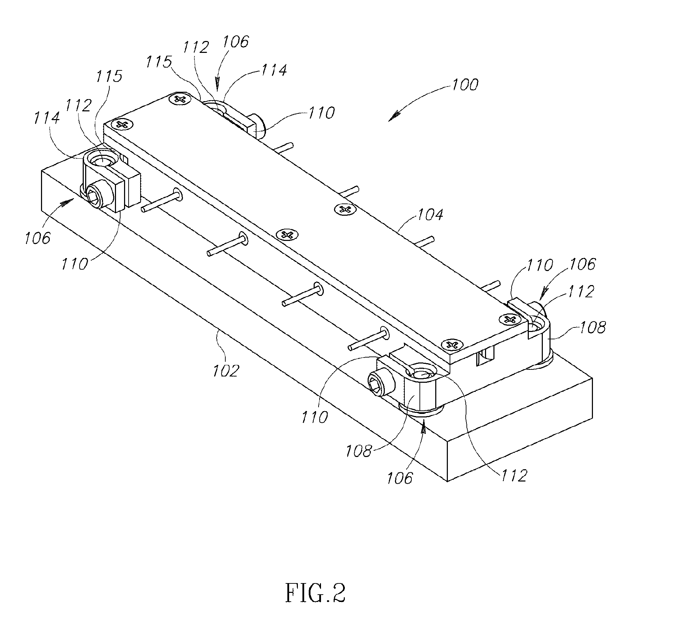

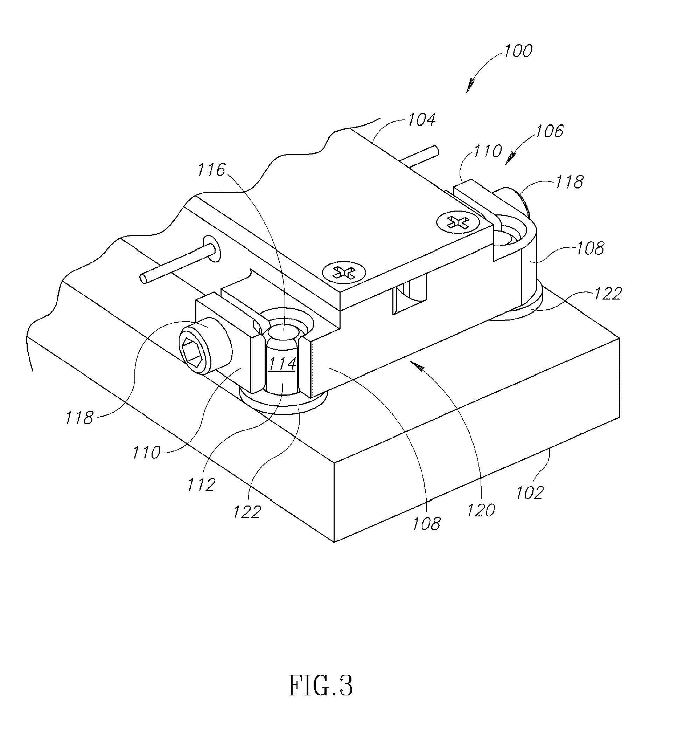

FIGURES 2 and 3 show a structural packaging assembly 100 that overcomes some of the drawbacks of the existing structural packaging assembly 100 as well as meets many, if not all, of the aforementioned qualification standards or levels. The structural packaging assembly 100 includes a mounting plate 102 and a housing 104. The mounting plate 102 may be made out of Aluminum. The housing 104, according to one embodiment, is made from Stainless Steel 316 and includes a prescribed length, width, and height versus wall thickness relationship configured to insure that vibrational forcing functions, such as those due to applied bending moments and torsional stresses, do not adversely effect the structural packaging assembly 100 when such forcing functions occur at or below about 3500 Hz, or at least at or below a vibrational frequency that is outside of a vibration sensitive region for the structural packaging assembly 100.

The structural packaging assembly 100 utilizes a four point mounting system 106 that advantageously provides a maximum optics length with a minimally sized envelope even when considering that all four mounting feet 108 and 114 are included when determining the length and/or width of the assembly 100. The forward mounting feet 108 and aft mounting feet 114 extend from the housing 104 and include clamp mechanisms 110, such as "C" clamp blocks, to allow for precise alignment with the mounting plate 102 and provide a high resonance mounting method to the mounting plate 102. The forward mounting feet 108 may be are precisely toleranced to provide controlled alignment between the housing 104 and the mounting plate 102. The aft mounting feet 114 include a neck portion 115 to allow flexibility in the package to compensate for the CTE mismatch between the housing 104 and the mounting plate 102. Additional CTE compensation along the length of the package can be added by including a small forward or backswept angle at the neck 115 with respect to the housing 104 (rotated in-the same plane as the mounting plate 102).

As best seen in FIGURE 3, the mounting feet 108 are attached to the mounting plate 102 using dowels 112, which are press fit at least into the mounting plate 102. In addition, the dowels 112 may provide an amount of thermal conductivity between the mounting plate 102 and the housing 104. In one embodiment, the dowels 112 include a Titanium Carbide (TiC) coating 114 applied through a vacuum deposition process as a means to electrically isolate the mounting plate 102 from the housing 104. In addition, an upper free surface 116 of the dowel 112 may be coated with a layer of a hard coating such as silicon oxide or a similar coating applied through a vapor deposition process, where the hard coating operates as an electrical isolator. The dowels 112 may take the form of stainless steel dowel pins, which may be configured with a circular or other type of cross-sectional shape in order to securely couple the housing 104 to the mounting plate 102.

As noted previously, the multi-function optical chip (MFC) is located within the housing 104 and is thus not visible in the respective drawings. During assembly, the housing 104 is attached to the mounting plate 102 by torqueing and thus tightening fasteners 118 that extend through apertures located in the clamps 110 of the mounting feet 108 to engage the housing 104. The fasteners 118 are tightened to a pre-selected torque level, which in turn fixedly connects the housing 104 to the mounting plate 102.

In one embodiment, two or three dowels 112 are initially pressed into the mounting plate 102, where one dowel 112 may be larger in diameter than the other two dowels 112. One purpose for having different sized dowels 112 is to properly clock or orient the housing 104 relative to the mounting plate 102. Another purpose for having the larger sized dowel 112 is for connecting output leads to the mounting plate 102 via the larger dowel 112. It is further appreciated that the dowels 112 may be installed into the mounting plate 102 via a number of mechanical techniques, to include, but not limited to, press fitting, shrink fitting, threading, bonding, etc.

As part of the assembly process, an air gap 120 may be installed between the housing 104 and the mounting plate 102. One method of achieving the air gap 120 is to provide electrically insulated spacers 122 around the dowels 112 and located between the housing 104 and the mounting plate 102. As best seen in FIGURE 3, a thickness of the air gap 120 is substantially equal to a thickness of the spacer 122. In addition to or alternative to the spacers 122, non-structural plastic washers (not shown) may be included to adjust or provide the air gap 120.

The structural packaging assembly 100 described above may advantageously withstand shock and vibration levels to 20 G_{RMS} (i.e., root-mean-square gravitational acceleration) between 0 to 20,000 Hz, which is intended to ensure the structural integrity of the Multi-functional Optical Chip (MFC) under space vehicle and missile launch conditions. In addition, the structural packaging assembly 100 is intended to provide consistently improved optical performance of the gyroscopic unit during strategic navigational guidance in a hostile military environment, for example. Further, the structural packaging assembly 100 may advantageously provide a substantial amount of thermal and structural stress relief to the delicate MFC throughout an operational life of the MFC, which may be approximately as long, if not longer, than thirty years. Lastly, the structural packaging assembly 100 may further provide thermal conductivity paths within the assembly while maintaining electrical isolation between the housing 104 and the mounting plate 102 using practical and cost effective manufacturing techniques. By way of example, the structural packaging assembly 100 may sustain higher shock and vibration levels without causing unwanted displacements or movement of the optical chip and thus may reduce optical errors as high as 5000 ppm (pulse-position modulation).

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

## Claims

1. A housing for mounting an optical chip in a gyroscopic unit, the housing comprising:
a structural cover;
a plurality of sidewalls extending from and fixedly attached to the structural cover, wherein the sidewalls and the structural cover are structurally arranged to produce a housing sectional modulus capable of resisting a substantial amount of deformation when the housing is subjected to a first vibration range that is within an operational vibration range of the gyroscopic unit; and
a plurality of mounting feet coupled to and extending from the sidewalls.

2. The housing of Claim 1, wherein the housing sectional modulus resists deformation due to bending and torsional loads.

3. The housing of Claim 1, wherein the first vibration range is in a range of about 0 - 3500 Hertz.

4. The housing of Claim 1, wherein the mounting feet are configured as clamps to provide resonance dampening for applied vibrational loads to the housing.

5. A packaging assembly for mounting an optical chip in a gyroscopic unit, the packaging assembly comprising:
a mounting plate;
a plurality of dowels fixed to and extending from the mounting plate; and
a housing having sidewalls and mounting feet extending from the sidewalls, each mounting foot having a first portion with a first aperture to receive a portion of one of the respective dowels and a clamping portion extending from the first portion, the clamping portion having a second aperture to receive a fastening device, wherein tightening the fastening device fixedly couples the housing to the mounting plate while substantially, vibrationally isolating the housing from the mounting plate when the gyroscopic unit operates within a first vibration range.

6. The packaging assembly of Claim 5, wherein the first vibration range is within an operational vibration range of the gyroscopic unit.

7. The packaging assembly of Claim 5, further comprising a plurality of insulators located around each dowel pin and positioned between the housing and the mounting plate to maintain the housing and the mounting in a spaced apart relationship.

8. A method for mounting an optical chip within a gyroscopic unit, the method comprising:
placing the optical chip within a housing, the housing having a plurality of mounting feet;
fixing a plurality of dowels to a mounting plate, wherein a portion of each dowel extends from the mounting plate; and
clamping each of the mounting feet to each of the respective dowels to produce a packaging assembly, wherein the packaging assembly includes a resonant frequency that is outside of an operational vibration range of the gyroscopic unit.

9. The method of Claim 8, wherein fixing the plurality of dowels to the mounting plate includes press fitting the dowels into apertures of the mounting plate.

10. The method of Claim 8, further comprising inserting a spacer between the housing and the mounting plate to maintain the housing and the mounting plate in a spaced apart relationship.
